# EUROPÄISCHE PATENTSCHRIFT

(11) **EP 2 223 127 B1**
(45) Veröffentlichungstag und Bekanntmachung des Hinweises auf die Patenterteilung: **21.11.2018**
(21) Anmeldenummer: 08857518.8
(22) Anmeldetag: 03.12.2008
(51) Int. Cl.: G01P 21/02, B60W 40/105, G01C 22/00, G01C 25/00

(54) **VERFAHREN ZUR KALIBRIERUNG EINES RADDREHZAHLERFASSUNGSSYSTEMS**
METHOD FOR CALIBRATING A WHEEL SPEED DETECTION SYSTEM
PROCÉDÉ D'ÉTALONNAGE D'UN SYSTÈME D'ACQUISITION DE VITESSE DE ROUE

(30) Priorität: 04.12.2007 DE 102007058193
(43) Veröffentlichungstag der Anmeldung: 01.09.2010
(73) Patentinhaber: Continental Teves AG & Co. OHG, 60488 Frankfurt am Main (DE)
(72) Erfinder: KIRCHER, Andreas, 64285 Darmstadt (DE)
(86) Internationale Anmeldenummer: PCT/EP2008/066742
(87) Internationale Veröffentlichungsnummer: WO 2009/071603

(56) Entgegenhaltungen:
- DE-A1- 19 615 248
- US-A- 5 539 647
- US-A1- 2004 181 320
- US-A1- 2006 025 921

## Beschreibung

Die Erfindung betrifft ein Verfahren zur Kalibrierung eines Raddrehzahlerfassungssystems gemäß Oberbegriff von Anspruch 1 sowie ein Kraftfahrzeug-Bremssystem, welches zur Durchführung aller Schritte des Verfahrens geeignet ist.

Es sind Raddrehzahlerfassungssysteme bekannt, welche die Sensorausgangssignale der Raddrehzahlsensoren eines Kraftfahrzeugs auswerten und mittels einer gespeicherten Radgröße wie beispielsweise dem Raddurchmesser die Geschwindigkeit des Kraftfahrzeugs berechnen. Raddrehzahlerfassungssysteme sind z.B. aus DE 196 15 248, US 2004181320, US 5 539 647 und US 2006025921 bekannt.

Die Aufgabe der vorliegenden Erfindung besteht darin, ein Verfahren anzugeben, mit welchem die Auswertung der Raddrehzahlsensorausgangssignale hinsichtlich einer höheren Genauigkeit verbessert werden kann.

Die Aufgabe wird erfindungsgemäß gelöst durch das Verfahren gemäß Anspruch 1.

Der Erfindung liegt der Gedanke zu Grunde, ein Verfahren zur Adaption der Auswertung von Raddrehzahlsensorausgangssignalen in einer elektronischen Kontrolleinheit vorzuschlagen, bei welchem eine, insbesondere im Wesentlichen absolute, Wegstreckeninformation, die auf Basis einer zurückgelegten Referenzwegstrecke gewonnen wird, für diese Adaption verwendet wird.

Unter einer elektronischen Kontrolleinheit wird vorzugsweise ein Mikrocomputer, insbesondere eines Kraftfahrzeugregelungssystems, besonders bevorzugt eines Kraftfahrzeugbremssystems, verstanden.

Die Auswertung der Raddrehzahlsignale erfolgt bevorzugt im Rahmen eines Verfahrens, welches insbesondere als Softwareverfahren durchgeführt wird. Dieses Verfahren berechnet besonders bevorzugt eine Fahrzeuggeschwindigkeit und/oder eine innerhalb einer definierten Zeitspanne zurückgelegte Wegstrecke und/oder führt eine Weiterverarbeitung der Raddrehzahlsensorsignale durch und/oder stellt weiterverarbeitete Raddrehzahlsignale einem Verfahren zur indirekten Reifendruck- bzw. Reifendruckverlustüberwachung zur Verfügung.

Das Kalibrierungsverfahren eines Raddrehzahlerfassungssystems ist bzw. umfasst vorzugsweise ein Adaptionsverfahren einer Auswertungs- bzw. Weiterverarbeitungssoftware für Raddrehzahlsensorausgangssignale.

Unter einer Referenzwegstrecke wird bevorzugt eine konkrete, von dem Kraftfahrzeug, in welchem das Verfahren zur Kalibrierung des Raddrehzahlerfassungssystems durchgeführt wird, zurückgelegte Wegstrecke verstanden, welche zur Gewinnung für Wegstreckeninformationen herangezogen wird, die diesem Kalibrierungs- bzw. Adaptionsverfahren zu Grunde gelegt werden. Die Referenzwegstrecke muss dabei besonders bevorzugt definierten Bedingungen genügen.

Es ist bevorzugt, dass die Wegstreckeninformation der Referenzwegstrecke mittels eines Satellitennavigationssystems, insbesondere eines GPS (Global Positioning System)- oder Galileo-Systems oder eines differentiellen GPSs bzw. eines differenziellen Satellitennavigationssystems und/oder mindestens einer Streckeninfrastruktureinheit, bestimmt wird. Unter einer Streckeninfrastruktureinheit wird zweckmäßigerweise eine Infrastruktureinheit verstanden, welche ihre (Geo)-Positions-Koordinaten, insbesondere per Funk, an ein Kraftfahrzeug übermitteln kann. Diese Streckeninfrastruktureinheit ist beispielsweise eine so genannte Road-Side-Unit. Besonders bevorzugt werden vom Satellitennavigationssystem und/oder der Streckeninfrastruktureinheit absolute (Geo)-Koordinaten an das Kraftfahrzeug übertragen.

Ein in der elektronischen Kontrolleinheit gespeicherter Raddurchmesser und/oder Radradius und/oder Radumfang wird zweckmäßigerweise an die Wegstreckeninformation der Referenzwegstrecke adaptiert.

Diese Wegstreckeninformation wird vorzugsweise unter Berücksichtigung von Karteninformationen, insbesondere mittels eines definierten Referenzwegstreckenanfangs- und - endpunktes ermittelt.

Bei der Berechnung der Wegstreckeninformation werden bevorzugt eine Raddrehzahlsensor-Wegstrecke, welche mittels zumindest eines Raddrehzahlsensors für die zurückgelegte Referenzwegstrecke ermittelt wird, insbesondere radindividuell und anschließend hinsichtlich separat durchgeführter Verfahren gemittelt, und eine Navigations-Wegstrecke, welche mittels eines Satellitennavigationssystems und/oder mindestens einer Streckeninfrastruktureinheit ermittelt wird, mit einander verglichen und/oder zueinander in Relation gesetzt. Dabei wird eine Adaptionsgröße, zumindest berücksichtigend die Raddrehzahlsensor-Wegstrecke sowie die Navigations-Wegstrecke, berechnet, welche zur Adaption der Auswertung des wenigstens einen Raddrehzahlsensorausgangssignals in der elektronischen Kontrolleinheit gespeichert wird bzw. bei dieser Auswertung berücksichtigt wird. Die Adaptionsgröße ist dabei besonders bevorzugt der Quotient aus Raddrehzahlsensor-Wegstrecke durch Navigations-Wegstrecke. Ganz besonders bevorzugt wird dieser Quotient zur Adaption der Auswertung des wenigstens einen Raddrehzahlsensorausgangssignals danach mit der jeweiligen Raddrehzahl und/oder der aus der jeweiligen Raddrehzahl bzw. dem Raddrehzahlsignal berechneten Geschwindigkeit und/oder Beschleunigung und/oder einer entsprechend berechneten Wegstrecke multipliziert. Insbesondere wird die Navigations-Wegstrecke durch Interpolation mehrerer mittels des Satellitennavigationssystems berechneter Teilwegstrecken durchgeführt. Die Navigations-Wegstrecke wird alternativ vorzugsweise oder zusätzlich in der elektronischen Kontrolleinheit des Raddrehzahlerfassungssystems berechnet, indem Koordinaten, welche dem Startpunkt und dem Endpunkt und optional Teilwegpunkten der Referenzwegstrecke zugeordnet sind und vom Satellitennavigationssystem zur Verfügung gestellt werden addiert bzw. subtrahiert werden. Alternativ vorzugsweise findet diese Berechnung direkt im Satellitennavigationssystem statt und das Ergebnis, insbesondere die Navigations-Wegstrecke, wird an die elektronische Kontrolleinheit des Raddrehzahlerfassungssystems übertragen.

Zur Plausibilisierung ist es zweckmäßig, die Raddrehzahlsensor-Wegstrecken von zwei oder mehr Raddrehzahlsensoren hinsichtlich möglicher, wesentlicher Unterschiede zu prüfen und besonders bevorzugt eine Mittelwertbildung durchzuführen. Bei der Berechnung der Navigations-Wegstrecke werden zweckmäßigerweise wenigstens zwei Positionskoordinaten eines Satellitennavigationssystems oder zumindest zwei Positionskoordinaten von Streckeninfrastruktureinheiten oder Kombinationen dieser Absolut-Positions-Quellen berücksichtigt. Daten und Informationen einer zurückgelegten Wegstrecke werden nur dann als Daten und Informationen einer Referenzwegstrecke zur Durchführung des Verfahrens verwendet, wenn beim Zurücklegen dieser Wegstrecke die beiden folgenden Bedingungen erfüllt sind:
- Eine mittels des Satellitennavigationssystems und eines Lenkwinkelsensors berechnete Krümmung, die auf der zurückgelegten Wegstrecke auftritt, überschreitet nicht einen definierten Krümmungsgrenzwert, insbesondere soll kein "Schlingerkurs" des Kraftfahrzeugs bzw. stark schwankende Koordinaten des Satellitennavigationssystems vorliegen bzw. die Änderungen der Koordinaten des Satellitennavigationssystems müssen entlang der zurückgelegten Wegstrecke in einer oder mehr Raumrichtungen unterhalb eines definierten Grenzwert bezüglich einer definierten Zeit oder einer definierten, zurückgelegten Teilwegstrecke liegen,
- es tritt keine negative oder positive Beschleunigung auf der zurückgelegten Wegstrecke auf, welche einen definierten Grenzwert überschreitet. Daten und Informationen einer zurückgelegten Wegstrecke werden nur dann als Daten und Informationen einer Referenzwegstrecke zur Durchführung des Verfahrens verwendet, wenn beim Zurücklegen dieser Wegstrecke zusätzlich eine Bedingung aus der Gruppen von Bedingungen erfüllt ist:
   - es wird kein Niederschlag durch einen Regensensor erkannt und/oder der Scheibenwischer nicht betätigt,
   - es erfolgt kein ABS- und/oder ESP- und/oder ASC-Regelungseingriff des elektronischen Bremssystems auf der zurückgelegten Wegstrecke,
   - die durchschnittliche Fahrzeuggeschwindigkeit auf dieser zurückgelegten Wegstrecke ist größer als 70 km/h und/oder
   - dem Satellitennavigationssystem steht während dieser zurückgelegten Wegstrecke ständig eine definierte Mindestanzahl an Satelliten, insbesondere 3, 4 oder 5, zur Positionsbestimmung zur Verfügung.

Die Navigations-Wegstrecke wird bevorzugt mittels einer zusätzlichen elektronischen Kontrolleinheit ermittelt und der ersten elektronischen Kontrolleinheit zur Durchführung des Kalibrierungs- bzw. Adaptionsverfahrens zur Verfügung gestellt.

Bei der Berechnung der Navigations-Wegstrecke wird bevorzugt ein elektronischer Horizont berücksichtig, welcher beispielsweise in Druckschrift US 6,405,128 vorgeschlagen wird und insbesondere Koordinaten und Navigationsinformationen von Wegstrecken und/oder Teilwegstrecken berücksichtigt, die im Wesentlichen für ein Kraftfahrzeug tatsächlich befahrbaren Straßen bzw. Straßenabschnitten entsprechen. Hierbei werden besonders bevorzugt Höhenunterschiede bzw. das geographische Relief berücksichtigt.

Es ist zweckmäßig, dass die Navigations-Wegstrecke und Zusatzinformationen über die zurückgelegte Referenzwegstrecke mit einem Zeitstempel versehen vom Satellitennavigationssystem an die elektronische Kontrolleinheit übertragen werden. Diese Zusatzinformationen umfassen dabei insbesondere Startzeitpunkt, Endzeitpunkt, Weglänge oder alternativ ein Startzeitpunkt, eine Weglänge mit dem Wert Null und zu einem späteren Zeitpunkt einen Endzeitpunkt und eine zurückgelegte Weglänge. Hierdurch muss die elektronische Kontrolleinheit keine selbstständige Auswertung von Koordinaten des Satellitennavigationssystems vornehmen.

Im Rahmen des Verfahrens erfolgt vorzugsweise ein Einlernen von Kalibrations- bzw. Adaptionsfaktoren für unterschiedliche Raddurchmesser. Dabei wird insbesondere stets im Wesentlichen gleiche Genauigkeit von Geschwindigkeit und Wegstrecke ermittelt und zur Verfügung gestellt. Falls keine absolute Kalibrierung bzw. Adaption durchgeführt wird, würde ein Umstieg auf einen anderen Reifendurchmesser beispielsweise automatisch auch zu einer Abweichung des gemessenen Weges bzw. der gemessenen Geschwindigkeit führen.

Es ist zweckmäßig, dass das Verfahren im Wesentlichen parallel für alle Raddrehzahlsensoren des Kraftfahrzeugs durchgeführt wird.

Außerdem betrifft die Erfindung ein Kraftfahrzeug-Bremssystem, welches zur Durchführung aller Schritte des erfindungsgemäßen Verfahrens geeignet ist.

Das erfindungsgemäße Verfahren ist vorzugsweise zur Erhöhung der Genauigkeit aller geschwindigkeitsrelevanter bzw. - abhängiger Größen eines Kraftfahrzeugs vorgesehen. Dies betrifft insbesondere auch direkt oder indirekt hieraus abgeleitete Größen, wie beispielsweise eine zurückgelegte Wegstrecke oder einen gemittelten Kraftstoffverbrauch. Besonders bevorzugt wird das Verfahren verwendet, um Veränderungen eines oder mehrerer Raddurchmesser zu erkennen, insbesondere im Rahmen eines zusätzlichen Verfahrens, wie beispielsweise zur Bestimmung des Reifendrucks oder Erkennung eines Reifendruckverlustes oder zur Bestimmung einer Reifenprofilabnutzung oder zur Erkennung einer falsch montierten Reifengröße, ganz besonders bevorzugt zum Schätzen des Reifenverschleißes durch Abgleich von Reifenluftdruck und Reifenaußendurchmesser. Das erfindungsgemäße Verfahren kann zweckmäßigerweise zur Berechnung einer durch das Kraftfahrzeug zurückgelegten Bahnkurve bzw. eines entsprechenden Kurvenradius verwendet werden.

Das erfindungsgemäße Verfahren wird ständig oder zu definierten Zeitpunkten wiederholt, um immer wieder eine Genauigkeitsverbesserung durch Anpassung der Raddrehzahlsensorauswertung an die Randbedingungen des Raddrehzahlerfassungssystems zu erhalten.

Weitere bevorzugte Ausführungsformen ergeben sich aus den Unteransprüchen und der nachfolgenden Beschreibung eines Ausführungsbeispiels an Hand von Figuren.

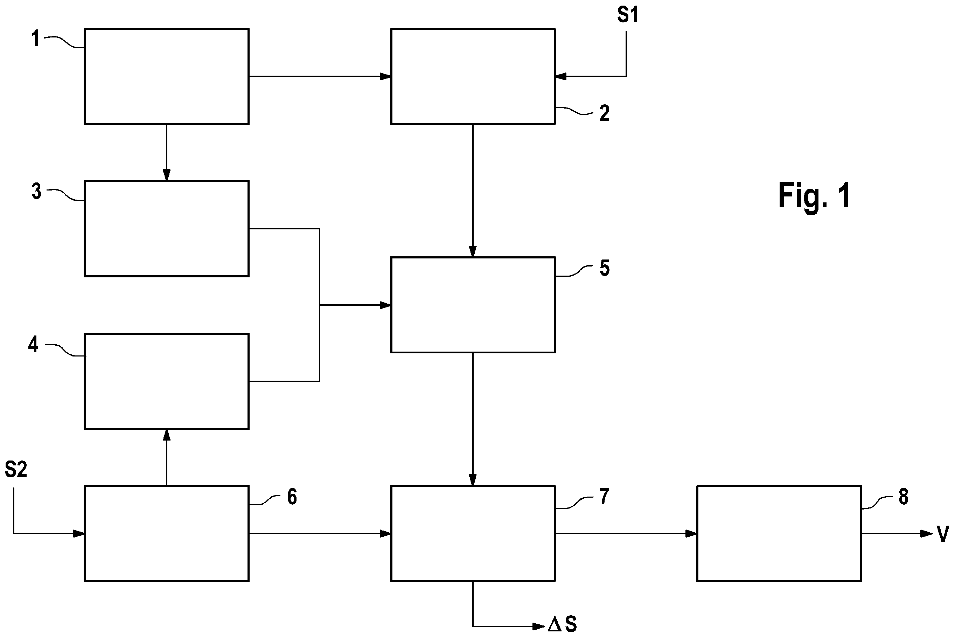

Es zeigt in schematischer Darstellung
- Fig. 1: ein Ausführungsbeispiel eines Ablaufdiagramms eines Verfahrens zur Kalibrierung eines Raddrehzahlerfassungssystems.

In Fig. 1 ist ein beispielhaftes Verfahren zur Kalibrierung eines Raddrehzahlerfassungssystems veranschaulicht. Das Raddrehzahlerfassungssystem umfasst dabei eine elektronische Kontrolleinheit ECU sowie vier mit dieser ECU verbundene Raddrehzahlsensoren. Satellitennavigationssystem GPS ist ebenfalls mit der ECU verbunden.

In Funktionsblock 1 wird eine absolute Position des Kraftfahrzeugs zu einem Zeitpunkt t auf Basis von GPS-Koordinaten oder auf Basis einer bekannten Position, deren Koordinaten in einer digitalen Karte des GPS hinterlegt sind, bestimmt. Funktionsblock 1 kann dabei entweder im GPS ausgeführt werden oder direkt in der ECU, welche mit dem GPS verbunden ist. Diese absolute Position wird an Funktionsblöcke 2 und 3 übertragen. An Funktionsblock 2 wird außerdem Sensorsignal S1 des Kraftfahrzeugbremssystems, beispielgemäß umfassend ein Lenkwinkel, eine Raddrehzahl und eine Geschwindigkeit übertragen, wobei die Raddrehzahl und die Geschwindigkeit noch unkalibriert im Sinne des aktuellen Verfahrenszyklus sind. In Funktionsblock 2 werden anschließend mehrere Bedingungen überprüft, wie ob keine negative oder positive Beschleunigung auf der zurückgelegten Wegstrecke auftritt, welche einen definierten Grenzwert überschreitet, ob eine mittels des Satellitennavigationssystems und eines Lenkwinkelsensors berechnete Krümmung, die auf der zurückgelegten Wegstrecke auftritt, einen definierten Krümmungsgrenzwert nicht überschreitet. Zusätzlich werden andere Bedingungen überprüft, wie beispielsweise ob kein Regelungseingriff des elektronischen Bremssystems auf der zurückgelegten Wegstrecke erfolgte, ob kein Niederschlag durch einen Regensensor erkannt und/oder der Scheibenwischer nicht betätigt wurde, ob die durchschnittliche Fahrzeuggeschwindigkeit auf dieser zurückgelegten Wegstrecke ist größer als 70 km/h war, also keine Stadtfahrt vorliegt oder ob dem Satellitennavigationssystem während dieser zurückgelegten Wegstrecke ständig eine definierte Mindestanzahl an Satelliten zur Positionsbestimmung zur Verfügung steht. Falls diese Bedingungen erfüllt sind, kann die zurückgelegte Wegstrecke als Referenzwegstrecke betrachtet werden und für das Verfahren herangezogen werden. Falls diese Bedingungen nicht erfüllt sind, wird beispielgemäß davon ausgegangen, dass insbesondere die Raddrehzahlsensorinformationen betreffend diese zurückgelegte Wegstrecke, zu unerwünschten Störungen unterworfen sind, wodurch keine Genauigkeitssteigerung durch eine Auswertung dieser Informationen erreicht werden könnte.

Funktionsblock 3 berechnet eine Navigations-Wegstrecke durch Summierung der GPS-Koordinaten eines Wegstreckenanfangs- und Wegstreckenendpunktes unter zusätzlicher Berücksichtigung von Positionen auf Teilwegstrecken mittels Interpolation.

In Funktionsblock 6 werden das Raddrehzahlsensorausgangssignal eines Raddrehzahlsensors hinsichtlich zurückgelegter Teilwegstrecken inkrementell ausgewertet und an Funktionsblock 4 übertragen, in welchem aus diesen inkrementellen Teilwegstrecken eine Raddrehzahlsensor-Wegstrecke hinsichtlich der zurückgelegten Wegstrecke berechnet wird.

Die Navigations-Wegstrecke und die Raddrehzahlsensor-Wegstrecke werden an Funktionsblock 5 übertragen. Danach wird die Navigations-Wegstrecke durch die Raddrehzahlsensor-Wegstrecke dividiert, wobei dieser so berechnete Quotient eine Adaptionsgröße bzw. einen Adaptionsfaktor bildet. Durch Speicherung dieser Adaptionsgröße wird die Auswertung der Raddrehzahlsensorausgangssignale an die Wegstreckeninformation der zurückgelegten Referenzwegstrecke adaptiert. Diese Adaptionsgröße wird dabei anschließend in Funktionsblock 7 zur Multiplikation mit den aus Funktionsblock 6 erhaltenen Teilwegstrecken jeweils zur Berechnung von korrigierten Teilwegstrecken ΔS multipliziert. Aus diesen korrigierten Teilwegstrecken ΔS wird jeweils durch Division durch die Zeit des entsprechenden Zeitintervalls eine korrigierte Geschwindigkeit v in Funktionsblock 8 berechnet, welche im Wesentlichen einer korrigierten Momentangeschwindigkeit des Kraftfahrzeugs entspricht. Das Kalibrierungsverfahren wird beispielhaft im Wesentlichen parallel für alle Raddrehzahlsensoren durchgeführt. Optional wird ein nicht veranschaulichter Plausibilisierungs-Verfahrensschritt durchgeführt, in dem beispielsweise die Raddrehzahlsensor-Wegstrecken und/oder die Adaptionsgrößen aller Raddrehzahlsensoren bzw. für alle Raddrehzahlsensoren auf Wesentliche Abweichungen geprüft bzw. mit einander vergleichen werden.

## Patentansprüche

1. Verfahren zur Kalibrierung eines Raddrehzahlerfassungssystems, umfassend zumindest einen Raddrehzahlsensor, der ein Raddrehzahlsensorausgangssignal (S2) liefert, und wenigstens eine elektronische Kontrolleinheit, wobei das mindestens eine Raddrehzahlsensorausgangssignal (S2) in der elektronischen Kontrolleinheit ausgewertet wird, wobei die Auswertung des zumindest einen Raddrehzahlsensorausgangssignals an eine Wegstreckeninformation adaptiert wird (5), welche aus einer zurückgelegten Referenzwegstrecke gewonnen wird
**dadurch gekennzeichnet, dass**
Daten und Informationen einer zurückgelegten Wegstrecke nur dann als Daten und Informationen einer Referenzwegstrecke zur Durchführung des Verfahrens verwendet werden, wenn beim Zurücklegen dieser Wegstrecke die beiden folgenden Bedingungen erfüllt sind,
- eine mittels eines Satellitennavigationssystems und eines Lenkwinkelsensors (S1) berechnete Krümmung, die auf der zurückgelegten Wegstrecke auftritt, überschreitet nicht einen definierten Krümmungsgrenzwert,
- es tritt keine negative oder positive Beschleunigung auf der zurückgelegten Wegstrecke auf, welche einen definierten Grenzwert überschreitet.

2. Verfahren nach Anspruch 1, **dadurch gekennzeichnet, dass** die Wegstreckeninformation der Referenzwegstrecke mittels eines Satellitennavigationssystems und/oder zumindest einer Streckeninfrastruktureinheit bestimmt wird.

3. Verfahren nach Anspruch 1 oder 2, **dadurch gekennzeichnet, dass** zumindest ein in der elektronischen Kontrolleinheit gespeicherter Raddurchmesser, -radius, -umfang an die Wegstreckeninformation der Referenzwegstrecke adaptiert wird.

4. Verfahren nach mindestens einem der Ansprüche 1 bis 3, **dadurch gekennzeichnet, dass** die Wegstreckeninformation unter Berücksichtigung von Karteninformationen, insbesondere mittels eines definierten Referenzwegstreckenanfangs- und Referenzwegstreckenendpunktes, ermittelt (1) wird.

5. Verfahren nach mindestens einem der Ansprüche 1 bis 4, **dadurch gekennzeichnet, dass** bei der Berechnung der Wegstreckeninformation eine Raddrehzahlsensor-Wegstrecke (4), welche mittels zumindest eines Raddrehzahlsensors für die zurückgelegte Referenzwegstrecke ermittelt wird, und eine Navigations-Wegstrecke (3), welche mittels eines Satellitennavigationssystems und/oder mindestens einer Streckeninfrastruktureinheit ermittelt wird, mit einander verglichen und/oder zueinander in Relation gesetzt werden (5), wobei eine Adaptionsgröße berechnet wird, welche zur Adaption der Auswertung des wenigstens eines Raddrehzahlsensorausgangssignals in der elektronischen Kontrolleinheit gespeichert wird.

6. Verfahren nach Anspruch 5, **dadurch gekennzeichnet, dass** die Adaptionsgröße der Quotient aus der Raddrehzahlsensor-Wegstrecke und der Navigations-Wegstrecke ist.

7. Verfahren nach Anspruch 6, **dadurch gekennzeichnet, dass** der Quotient zur Adaption der Auswertung des wenigstens einen Raddrehzahlsensorausgangssignals danach mit der jeweiligen Raddrehzahl und/oder der aus der jeweiligen Raddrehzahl berechneten Wegstrecke (7) und/oder Geschwindigkeit (8) und/oder Beschleunigung multipliziert wird.

8. Verfahren nach mindestens einem der Ansprüche 5 bis 7, **dadurch gekennzeichnet, dass** die Navigations-Wegstrecke durch Interpolation mehrerer mittels des Satellitennavigationssystems berechneter Teilwegstrecken durchgeführt wird (3).

9. Verfahren nach mindestens einem der Ansprüche 1 bis 8, **dadurch gekennzeichnet, dass** Daten und Informationen einer zurückgelegten Wegstrecke nur dann als Daten und Informationen einer Referenzwegstrecke zur Durchführung des Verfahrens verwendet werden, wenn beim Zurücklegen dieser Wegstrecke zusätzlich mindestens eine Bedingung aus der Gruppen von Bedingungen (2),
- es wird kein Niederschlag durch einen Regensensor (S1) erkannt und/oder der Scheibenwischer (S1) nicht betätigt,
- die durchschnittliche Fahrzeuggeschwindigkeit (S1) auf dieser zurückgelegten Wegstrecke ist größer als 70 km/h,
- dem Satellitennavigationssystem steht während dieser zurückgelegten Wegstrecke ständig eine definierte Mindestanzahl an Satelliten zur Positionsbestimmung zur Verfügung,
erfüllt ist.

10. Kraftfahrzeug-Bremssystem, welches zur Durchführung aller Schritte eines Verfahrens gemäß mindestens einem der Ansprüche 1 bis 9 geeignet ist.

## Claims

1. Method for calibrating a wheel speed detection system, comprising at least one wheel speed sensor, which supplies a wheel speed sensor output signal (S2), and at least one electronic control unit, wherein the at least one wheel speed sensor output signal (S2) is evaluated in the electronic control unit, wherein the evaluation of the at least one wheel speed sensor output signal is adapted (5) to a distance information item which is acquired from a traveled reference distance, **characterized in that** data and information on a traveled distance are used as data and information of a reference distance for carrying out the method only if the two following conditions are met when this distance is traveled,
- a curvature, which occurs on the traveled distance and is calculated by means of a satellite navigation system and a steering angle sensor (Sl), does not exceed a defined curvature limiting value,
- no negative or positive acceleration which exceeds a defined limiting value occurs on the traveled distance.

2. Method according to Claim 1, **characterized in that** the distance information item of the reference distance is determined by means of a satellite navigation system and/or at least one route infrastructure unit.

3. Method according to Claim 1 or 2, **characterized in that** at least one wheel diameter, wheel radius or wheel circumference, which is stored in the electronic control unit, is adapted to the distance information item of the reference distance.

4. Method according to at least one of Claims 1 to 3, **characterized in that** the distance information item is determined (1) taking into account map information, in particular by means of a defined reference distance starting point and a reference distance end point.

5. Method according to at least one of Claims 1 to 4, **characterized in that** during the calculation of the distance information item a wheel speed sensor distance (4), which is determined by means of at least one wheel speed sensor for the traveled reference distance, and a navigation distance (3), which is determined by means of a satellite navigation system and/or at least one route infrastructure unit, are compared with one another and/or placed in relation to one another (5), wherein an adaptation variable is calculated and is stored for adaptation of the evaluation of the at least one wheel speed sensor output signal in the electronic control unit.

6. Method according to Claim 5, **characterized in that** the adaptation variable is the quotient of the wheel speed sensor distance and the navigational distance.

7. Method according to Claim 6, **characterized in that** the quotient for adapting the evaluation of the at least one wheel speed sensor output signal is subsequently multiplied by the respective wheel speed and/or the distance (7), calculated from the respective wheel speed, and/or the speed (8) and/or the acceleration.

8. Method according to at least one of Claims 5 to 7, **characterized in that** the navigation distance is carried out (3) by interpolating a plurality of partial distances which are calculated by means of the satellite navigation system.

9. Method according to at least one of Claims 1 to 8, **characterized in that** data and information on a traveled distance are used as data and information of a reference distance for carrying out the method only if additionally at least one condition from the following group of conditions (2) is met when this distance is traveled,
- no precipitation is detected by a rain sensor (S1) and/or the windshield wiper (S1) is not actuated,
- the average vehicle speed (S1) on this traveled distance is greater than 70 km/h,
- a defined minimum number of satellites for determining positions is continuously made available to the satellite navigation system during this traveled distance.

10. Motor vehicle brake system which is suitable for carrying out all the steps of a method according to at least one of Claims 1 to 9.

## Revendications

1. Procédé d'étalonnage d'un système de détection de vitesse de rotation de roue, comprenant au moins un capteur de vitesse de rotation de roue qui délivre un signal de sortie de capteur de vitesse de rotation de roue (S2) et au moins une unité de contrôle électronique, l'au moins un signal de sortie de capteur de vitesse de rotation de roue (S2) étant interprété dans l'unité de contrôle électronique, l'interprétation de l'au moins un signal de sortie de capteur de vitesse de rotation de roue étant adapté à une information de distance (5) qui est obtenue à partir d'une distance de référence parcourue
**caractérisé en ce que**
des données et des informations d'une distance parcourue ne sont utilisées comme données et informations d'une distance parcourue de référence en vue de mettre en oeuvre le procédé que si les deux conditions suivantes sont satisfaites lors du parcours de cette distance
- une courbure, calculée au moyen d'un système de navigation par satellite et d'un capteur d'angle de direction (S1) qui se produit sur la distance parcourue, ne dépasse pas une valeur limite de courbure définie,
- il ne se produit pas d'accélération positive ou négative sur la distance parcourue qui dépasse une valeur limite définie.

2. Procédé selon la revendication 1, **caractérisé en ce que** l'information de distance de la distance de référence est déterminée au moyen d'un système de navigation par satellite et/ou d'au moins une unité d'infrastructure d'itinéraire.

3. Procédé selon la revendication 1 ou 2, **caractérisé en ce qu'**au moins un diamètre, un rayon, un périmètre de roue enregistré dans l'unité de contrôle électronique est adapté à l'information de distance de la distance de référence.

4. Procédé selon au moins l'une des revendications 1 à 3, **caractérisé en ce que** l'information de distance est déterminée (1) en tenant compte d'informations cartographiques, notamment au moyen d'un point de départ de distance de référence et d'un point final de distance de référence.

5. Procédé selon au moins l'une des revendications 1 à 4, **caractérisé en ce que** lors du calcul de l'information de distance, une distance de capteur de vitesse de rotation de roue (4), laquelle est déterminée au moyen d'au moins un capteur de vitesse de rotation de roue pour la distance de référence parcourue, et une distance de navigation (3), laquelle est déterminée au moyen d'un système de navigation par satellite et/ou d'au moins une unité d'infrastructure d'itinéraire, sont comparées entre elles et/ou sont mises en relation l'une avec l'autre (5), une grandeur d'adaptation étant calculée, laquelle est enregistrée dans l'unité de contrôle électronique en vue de l'adaptation de l'interprétation de l'au moins un signal de sortie de capteur de vitesse de rotation de roue.

6. Procédé selon la revendication 5, **caractérisé en ce que** la grandeur d'adaptation est le quotient de la distance de capteur de vitesse de rotation de roue et de la distance de navigation.

7. Procédé selon la revendication 6, **caractérisé en ce que** le quotient destiné à l'adaptation de l'interprétation de l'au moins un signal de sortie de capteur de vitesse de rotation de roue est ensuite multiplié par la vitesse de rotation de roue respective et/ou la distance (7) calculée à partir de la vitesse de rotation de roue respective et/ou la vitesse (8) et/ou l'accélération.

8. Procédé selon au moins l'une des revendications 5 à 7, **caractérisé en ce que** la distance de navigation est effectuée (3) par interpolation de plusieurs distances partielles calculées au moyen du système de navigation par satellite.

9. Procédé selon au moins l'une des revendications 1 à 8, **caractérisé en ce que** des données et des informations d'une distance parcourue ne sont utilisées comme données et informations d'une distance de référence en vue de mettre en oeuvre le procédé que si en outre au moins une condition parmi les groupes de conditions (2) est satisfaite lors du parcours de cette distance
- aucune précipitation n'est détectée par un capteur de pluie (S1) et/ou l'essuie-glace (S1) n'est pas actionné,
- la vitesse moyenne du véhicule (S1) sur cette distance parcourue est supérieure à 70 km/h,
- un nombre minimal défini de satellites servant à la détermination de la position sont constamment disponibles pour le système de navigation par satellite pendant cette distance parcourue.

10. Système de freinage de véhicule automobile, lequel est adapté pour exécuter toutes les étapes d'un procédé selon au moins l'une des revendications 1 à 9.
